# EUROPEAN PATENT SPECIFICATION

(11) **EP 2 056 317 B1**
(45) Date of publication and mention of the grant of the patent: **27.04.2011**
(21) Application number: 07119553.1
(22) Date of filing: 29.10.2007
(51) Int. Cl.: H01H 13/70, H04M 1/22

(54) **Illuminated key-pad assembly**
Beleuchtete Tastaturbaugruppe
Ensemble clavier illuminé

(43) Date of publication of application: 06.05.2009
(60) Divisional application: 11153235.4
(73) Proprietor: RESEARCH IN MOTION LIMITED, Waterloo, Ontario N2L 3W8 (CA)
(72) Inventor: Chen, Chao Carl, Waterloo Ontario N2T 2T8 (CA); Kyowski, Timothy Herbert, Brantford Ontario N3P 1Z8 (CA); Penner, Dennis James, Wellesley Ontario N0B 2T0 (CA)
(74) Representative: Rickard, David John

(56) References cited:
- WO-A-2006/117659
- WO-A-2006/138149
- DE-A1- 2 737 697
- DE-U1- 20 201 423
- DE-U1-202004 001 350
- US-A1- 2005 068 202

## Description

This technology relates to illuminated key-pads, especially of the kind as used in cell-phones, personal digital assistants (PDAs) and the like. Generally, such key-pads are illuminated by the use of transparent or translucent light-transmitting films or sheets, which receive light from a light emitting diode (LED) provided for the purpose, and powered by the battery in the PDA.

In traditional designs of illuminated key-pad units, the LED has been mounted in the key-pad unit itself, and has been connected to the main circuit board of the PDA by means of a flexible printed circuit (FCP) connector. In other designs, the light-transmitting film or light-guide has been placed underneath the whole key-pad unit; in these designs, in order for the light to reach the key-caps, the light had to pass through a number of components, whereby a significant proportion of the light was attenuated.

Such a key-pad unit is known from e.g. DE 202 01 423 U1.

### GENERAL

In accordance with one aspect of the embodiments, there is provided an illuminated key-pad unit comprising: a set of depressible keys mounted on a base-frame; and a light-strip of transparent or translucent light-transmitting material; wherein a physical structure of the light-strip is such that the light-strip is capable of transmitting light received from a light source along the light-strip and of radiating that light from an overface of the light-strip; wherein: the keys comprise respective key-caps each comprising a molding of a transparent or translucent light-transmitting material and each comprising an over-surface, an under-surface, and a soft, springy and resilient web (52); the overface of the light-strip is in a face-to-face relationship with the under-surface of the key-cap; the overface of the light-strip is in a direct light-transmitting relationship with the under-surface of the key-cap; the material of the light-strip is flexible; and the under-surface of the key-cap is glued to the overface of the light-strip; whereby the light-strip is depressed when the key-cap is depressed, wherein the frame is configured as a grid, in that the frame comprises rails that define pockets respective to the key-caps between the rails; the webs are secured to the rails, and are arranged in the pockets defined by the frame.

In accordance with another aspect of the invention, there is provided a method for manufacturing an illuminated key-pad unit, comprising the steps of: providing a plurality of depressible key-caps, in which each key-cap is of a transparent or translucent light-transmitting material, and includes a soft, springy and resilient web (52), the webs secured to rails and arranged in pockets defined by a key-pad unit frame (23); providing a corresponding plurality of key-switch-actuators, adapted for contacting respective key-switches mounted on a PCB; providing a light-strip, of such structure as to be capable of transmitting light received from a light-source, along the light-strip, and of radiating that light from an overface of the light-strip; gluing the key-caps onto the overface of the light-strip; and attaching the key-switch-actuators onto an underface of the light-strip; whereby the light-strip resides between the key-caps and their respective key-switch-actuators, and whereby the light-strip is depressed when the key-cap is depressed.

### DETAILED DESCRIPTION OF PREFERRED EMBODIMENTS

By way of further explanation, an example of an illuminated key-pad unit for a PDA will now be described, with reference to the accompanying drawings, in which:
Fig.1 is a pictorial view of an illuminated key-pad unit, shown in association with the circuit-board of the PDA in which the key-pad unit is to be fitted.
Fig.2 is a sectioned-elevation on the line of the arrow 2 of Fig.1.
Fig.3 is a cross-section on the line 3-3 of Fig.2.
Fig.4 is a cross-section on the line 4-4 of Fig.2.
Fig.5 is a side elevational in the direction of the arrow 2 of Fig.1.
Fig.6 is a pictorial view of (part of) a light-strip component of the illuminated key-pad unit shown in Fig.1.
Fig.7 is a pictorial view of (part of) a frame component of the illuminated key-pad unit shown in Fig.1.

The scope of the patent protection sought herein is defined by the accompanying claims.

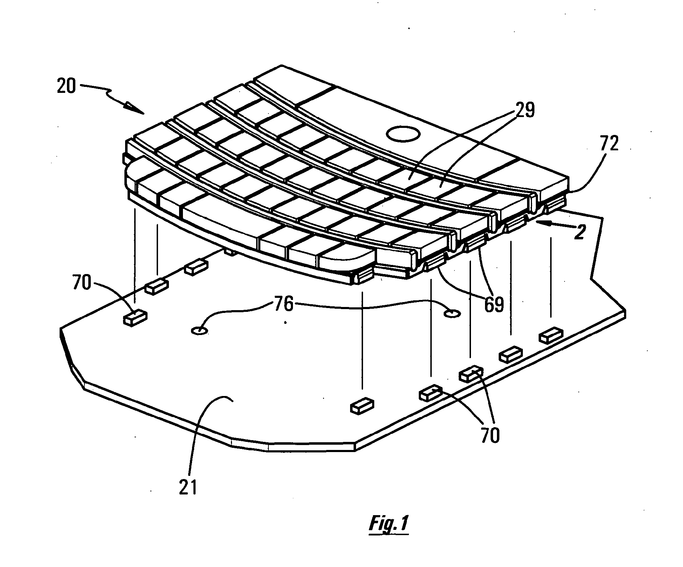

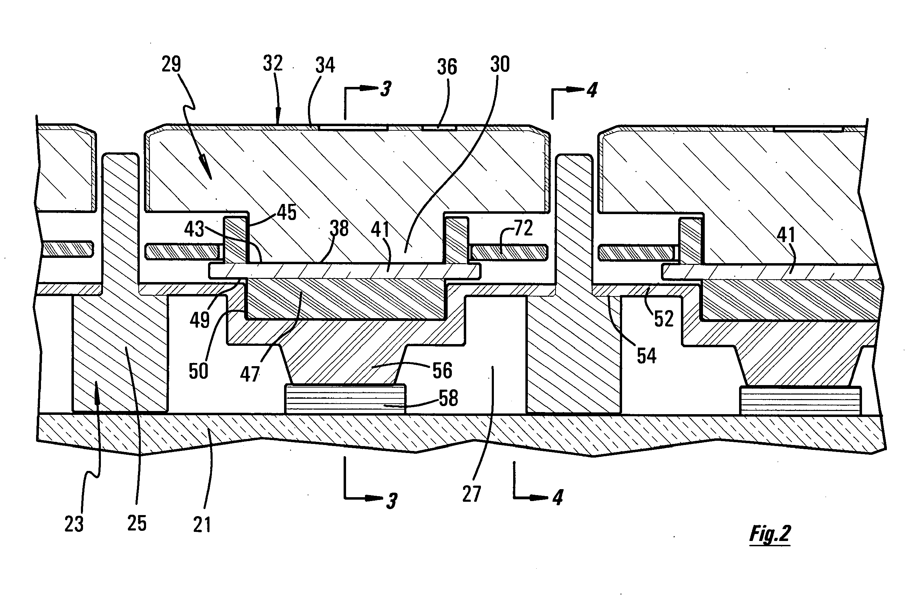

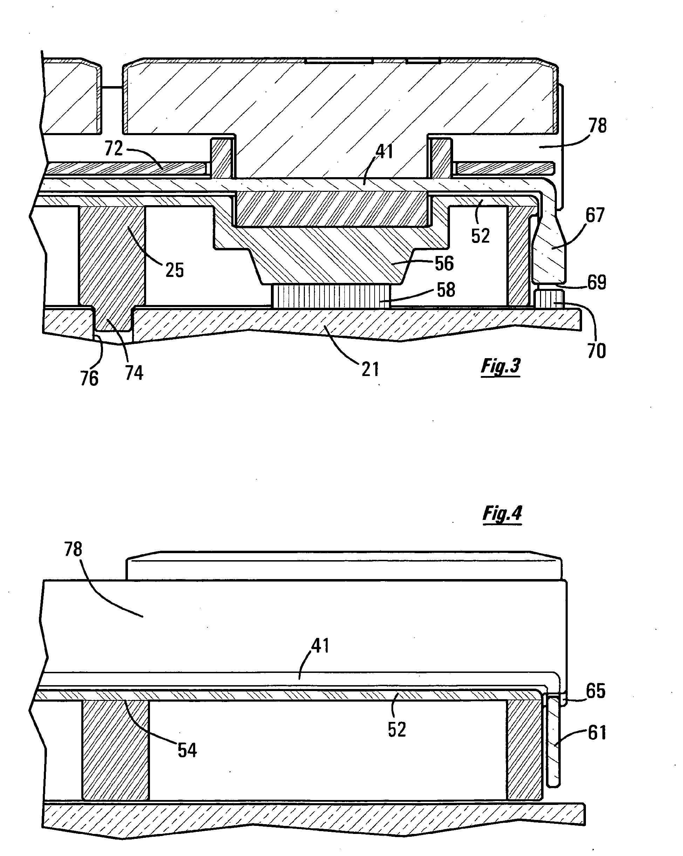

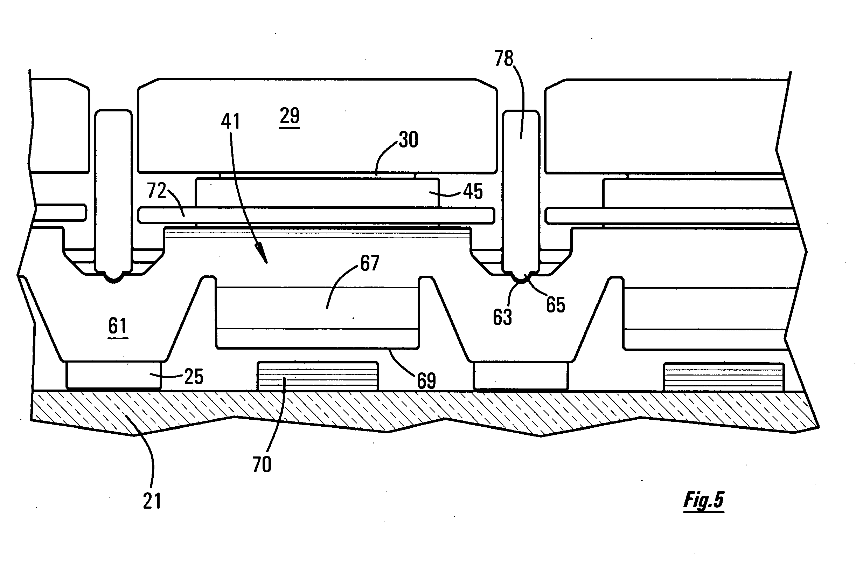

Figs.1-7 show an illuminated key-pad unit 20 that is designed for assembly to a printed circuit board (PCB) 21, for installation in a PDA.

The key-pad unit 20 includes a rigid plastic frame 23. The frame includes rails 25 which define spaces or pockets 27 between the rails. The pockets 27 correspond each to a particular key of the key-pad unit 20.

The key includes a key-cap 29, which is formed as a molding of transparent or translucent plastic. The key-cap molding includes an under-button 30, of the same material. The visible outer surface 32 of the key-cap 29 is provided with a mask or coating 34. Windows 36 formed in the coating 34 allow light to shine through the key-cap, to display the letter or numeral etc appropriate to that key.

Light is supplied to the under-surface 38 of the under-button 30 via a light-strip 41. The light-strip 41 comprises a thin film (of the order of e.g 0.4 mm thick) of transparent or translucent material, which transmits light received at one location of the light-strip 41 throughout the material. Thus, light emerges from the overface 43 of the light-strip 41 and is transmitted directly into the under-surface 38 of the under-button 30 of the key-cap 29, and out of the windows 36 in the coating 34 of the key-cap 29.

The under-surface 38 of the under-button 30 is glued to the overface 43 of the light-strip 41, both to physically secure the key-cap 29 to the light-strip 41, and to ensure efficient transmission of light therebetween.

The light-strip 41 is provided with button-receiving sockets 45, which are shaped to hold the respective key-caps 29 in a predetermined positional relationship with respect to the light-strip 41. The socket 45 is rectangular, and the under-button 30 is profiled to fit inside the hollow interior of the rectangle, whereby, when the under-button 30 is received in the socket 45, the key-cap 29 is thereby prevented from movement laterally and rotationally relative to the light-strip 41. This mechanical constraint of the key-cap 29 ensures that the key-cap is glued to the light-strip accurately in its correct predetermined position.

The button-receiving socket 45 also serves other functions. The walls of the socket 45, being of opaque material, prevent leakage of light sideways out from the under-button 30. Also, the walls of the socket 45, especially if coloured white, serve to reflect light back into the under-button, and hence into the key-cap, whereby the light shining through the windows 36 is all the brighter. Also, the walls of the socket 45 serve as a tray, to catch any (liquid) adhesive that might be squeezed out from between the under-surface 38 and the overface 43.

An under-block 47 is attached to the underface 49 of the light-strip 41. The under-block 47 is of opaque and reflective material, which serves to prevent leakage of light out underneath the light-strip 41, and to reflect light back into the light-strip.

Just as the under-button 30 resided in the button-receiving socket 45, so the under-block 47 resides in the block-receiving socket 50. The socket 50 is formed in the middle of a membrane or diaphragm or web 52. The web 52 is co-molded or bonded onto respective ledges 54 on the rails 25 of the frame 23.

The web 52 is of a flexible material such as silicone rubber. The webs have enough inherent stiffness to hold the keys, when not pressed, in their correct relationships and positions. Thus, the inherent stiffness of the web 52 is enough to hold the thickened actuator portion 56 of the web 52, underneath the block-receiving socket 50, clear of the key-switch 58 on the PCB 21. On the other hand, it is very easy for the user to exert enough downwards force on the key-cap 29 to depress the key, and thereby to bring the actuator 56 into contact with the key-switch 58. The force required to depress the key, however, is large enough that the person can feel a resistance to the pressure of their finger on the key.

In many previous designs of key-pad unit, an under-button of the key-cap has engaged directly into a socket formed in the flexible web. By contrast, in the present design, the under-button 30 of the key-cap engages the socket 45 attached on top of the light-strip 41, and the under-block 47 attached underneath the light-strip 41 engages the socket 50 formed in the web 52. In the present design, by contrast, the light-strip 41 is interposed between the key-cap 29 and the flexible web 52. As such, it will be understood that the light-strip 41 is now called upon to move (downwards), and to flex, somewhat, when the keys are depressed.

Thus, in the present design, the light-strip 41 should be flexible. But it is recognised that the light-transmitting material from which light-strips are typically made does have the desired degree of flexibility (that is to say, the ability to be flexed countless times without sustaining damage). In previous designs, the ability of the light-transmitting material to flex, and to move with the keys, has not been exploited, or not fully exploited.

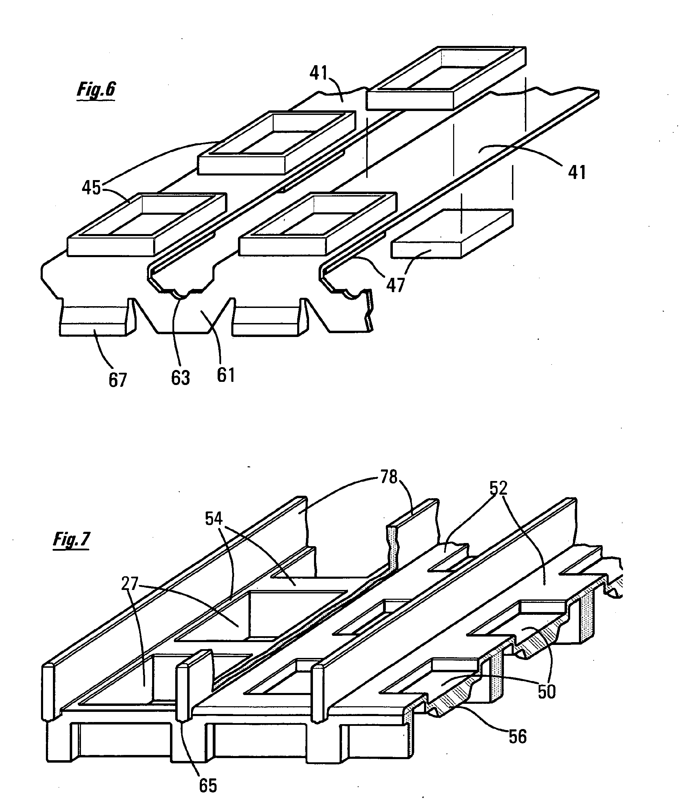

In a typical key-pad unit, there are between e.g fifteen and e.g thirty or more keys, arranged in e.g four or five rows. In the present design, there are as many light-strips 41 as rows of keys. As shown in Fig.6, the several light-strips 41 are joined together at their ends, by means of linking straps 61. The straps 61 are formed on the ends of the light-strips 41, and may be regarded as joining the rolled-over ends of the light-strips.

The straps 61 are formed with respective notches 63, which engage underneath respective tenons 65 that are molded into the frame 23. Thus, for assembly, the straps 61 are stretched over, and snap underneath, the tenons 65.

Between the straps 61, the rolled-over ends of the light-strips 41 are formed with light-catchers 67. These light-catchers 67 comprise thickened areas of the light-strip material. The designer arranges that the respective under-faces 69 of the light-catchers 67, when the key-pad unit 20 is assembled to its PCB 21, lie positioned directly over respective light-emitting-diodes 70 attached to the PCB 21. Thus, light enters the light-strips 41 from the LEDs via the respective light-catchers 67.

The several light-strips 41 preferably are formed from a single flat sheet of light-transmitting material, in which the form of the light-strips is stamped out. The form of the linking-straps 61 is provided also by the stamping. For co-molding the button-receiving sockets 45, and the under-blocks 47, the sheet of light-transmitting material is laid in the mold, and then the sockets and blocks are formed by compression-molding. Preferably, the stamping of the sheet is done after the items have been co-molded onto the sheet. The light-catchers 67 also can be co-molded onto the sheet, preferably using clear or transparent rubber material.

As shown, the light-catchers 67 are somewhat thicker than the light-strips themselves. Thus, the light-catcher serves as a collecting hood, for collecting light from the LED. Typically, the light-catchers 67 would be one mm thick, where the light-strips 41 are thinner -- typically less than 0.4 mm thick, down to about 0.1 mm thick.

The key-pad unit 20 comprises the several key-caps 29, the linked-together light-strips 41, the frame 23 with its co-molded webs 52, and a light-shielding sheet 72, This key-pad unit 20 can be simply lowered into position upon the PCB, without the need for complex physical or electrical connections.

The light-shielding sheet 72 inhibits light from leaking out into the spaces between the keys. It is preferably made of strips of black plastic film, with cut-outs for the under-buttons 30, disposed respectively along the lengths of the rows of keys.

The LEDs 70 are surface-mounted devices, SMDs, which are simply and directly connected to the PCB 21. There is no expensive need for the LEDs to be furnished with e.g FPC connectors. The point is emphasised that the illuminated key-pad unit 20 is fully functional, with respect to the PCB 21, simply upon being placed in close proximity to the PCB, both as to actuating the PCB key-switches and as to receiving light for illumination. The key-pad unit is a self-contained sub-assembly, which can be finish-manufactured prior to being placed over the circuit-board during final assembly of the PDA.

The designer preferably should see to it that each light-strip 41 has its own respective LED 70; and indeed has its own respective pair of LEDs, one at each end of the light-strip. It will be understood that the LEDs, arranged thus, can be actuated other than in unison. Because the light-strips 41 are illuminated each by its own (pair of) LEDs, the different rows of keys can be illuminated e.g in patterns or cascades, and can be of different colours. Alternatively, especially in cases where the number of keys is small, it can be arranged that all the individual keys have their own respective individual light-strips, and their own respective LEDs.

Having the light-strips 41 in direct contact with the key-caps 29 means that the available light is used very efficiently: thus, the illumination can be brighter than has been the case with previous illuminated key-pads; or alternatively the electrical (battery) power needed to illuminate the keys can be significantly reduced; or the illumination can be maintained for a longer period of time.

The SMT LEDs, as shown, shine upwards with respect to the PCB. Thus, the light-catchers 67 have to be angled downwards in order to receive the light. In some installations, it is preferred to use side-shining SMT LEDs, whereby the light-strips do not have to be wrapped over the edge of the frame. Side-shining LEDs are generally more costly than top-shining, but the light-strips are simplified.

Upon assembly of the key-pad unit 20 to the PCB 21, dowels 74 underneath the rails 25 of the frame 23 engage corresponding holes 76 in the PCB 21, for location purposes. Apart from that, no other physical or electrical or light-transmitting connections are required between the key-pad unit 20 and the PCB 21.

The frame 23 is of rigid plastic, and preferably is black in colour for light-shielding effect. The rails 25 that run widthwise across the PDA preferably, as shown, can be surmounted by rulers or dividers 78, which lie between adjacent rows of keys. It will be understood that dividing the rows of keys by a non-depressible ruler can be of considerable advantage to the user or operator of the PDA key-pad. The rulers 78 lie between, and serve to separate, the light-strips 41. The rulers 78 may be chrome-plated, or decorated with NCVM (non-conductive vapour metallization).

The "feel" of the key, when it is pressed, is important. The under-block 47 and the rectangle of the button-receiving socket 45 serve to stiffen the flexible light-strip 41 in the region of the key, for a good key feel. Also, the actuator 56 between the key-cap 29 and the key-switch 58 is important as regards the feel of the key. Because the actuator 56 is a thick mass, but is made of soft flexible material, the key feels firm enough, but yet there is no discernible bottoming of the key. Bottoming has a bad feel, and also can permit damage e.g to the PCB key-switch caused by overpushing.

To improve the feel of the keys, also the key-switches 58 preferably are slightly pre-loaded by the respective actuators 56, e.g by up to 0.15 mm of interference. Interference is preferred over a gap between the actuator and the key-switch, not only because lost travel would have a bad feel, but to supplement the firmness with which the key is held in its nominal position, when not depressed.

Co-molding the light-strips with the sockets and blocks permits or enables a combination of material properties. The light-strips, being attached between the key-caps and the actuators, need to be flexible enough to travel downwards, with the keys, when the keys are depressed. The light-strips 41 should also be flexible enough that when one of the keys is depressed, the keys adjacent to it in the row are not dragged down with it.

Terms of orientation, such as "above", down", "left", and the like, when used herein are intended to be construed as follows. When the terms are applied to an apparatus, the apparatus is distinguished by the terms only if there is not one single orientation into which the apparatus (or an image of the apparatus) can be placed, in which the terms can be applied consistently.

The numerals used in the drawings may be collated as:-
- 20: key-pad unit
- 21: circuit-board PCB
- 23: rigid plastic frame
- 25: rail
- 27: space or pocket
- 29: key-cap
- 30: under-button
- 32: visible outer surface
- 34: mask or coating
- 36: window
- 38: under-surface of under-button 30
- 41: light-strip
- 43: overface of light-strip 41
- 45: button-receiving socket
- 47: under-block
- 49: underface of light-strip 41
- 50: block-receiving socket
- 52: resilient membrane, diaphragm, or web
- 54: ledge
- 56: actuator
- 58: PCB key-switch
- 61: linking strap
- 63: notch
- 65: tenon
- 67: light-catcher
- 69: under-face of light-catcher 67
- 70: light-emitting diode LED
- 72: light-shielding sheet
- 74: dowel
- 76: dowel-hole
- 78: ruler

## Claims

1. An illuminated key-pad unit (20) comprising:
a set of depressible keys mounted on a base-frame (23); and
a light-strip (41) of transparent or translucent light-transmitting material; wherein a physical structure of the light-strip (41) is such that the light-strip (41) is capable of transmitting light received from a light source along the light-strip (41) and of radiating that light from an overface (43) of the light-strip (41);
wherein:
the keys comprise respective key-caps (29) each comprising a molding of a transparent or translucent light-transmitting material and each comprising an over-surface (32), an under-surface (38), and a soft, springy and resilient web (52);
the overface (43) of the light-strip (41) is in a face-to-face relationship with the under-surface (38) of the key-cap;
the overface (43) of the light-strip (41) is in a direct light-transmitting relationship with the under-surface (38) of the key-cap;
the material of the light-strip (41) is flexible; and
the under-surface (38) of the key-cap is glued to the overface (43) of the light-strip (41);
whereby the light-strip (41) is depressed when the key-cap is depressed, **characterised in that** the frame (23) is configured as a grid, **in that** the frame (23) comprises rails (25) that define pockets (27) respective to the key-caps (29) between the rails;
the webs (52) are secured to the rails, and are arranged in the pockets defined by the frame (23).

2. The illuminated key-pad unit (20) of claim 1, wherein the overface (43) of the light-strip (41) is in direct touching contact with the under-surface (38) of the key-cap.

3. The illuminated key-pad unit (20) of claim 1 or claim 2, wherein:
the unit (20) is so configured and arranged that the key-caps (29) are urged by the resilience of the webs (52) into respective rest positions, from which the key-caps (29) can be depressed by manual pressure, against the resilience of the webs (52).

4. The illuminated key-pad unit (20) of claim 3, wherein the webs (52) comprise silicone rubber.

5. The illuminated key-pad unit (20) of any preceding claim, wherein:
located on the webs (52) are respective block-receiving sockets (50); and
the unit (20) further comprises respective under-blocks (47), respective to the key-caps (29), located underneath the light-strip (41);
wherein:
the under-blocks (47) comprise respective upper-surfaces that face an underface (49) of the light-strip (41) and the upper-surfaces of the under-blocks (47) are opaque to light and are of a light-reflective nature; and
the block-receiving sockets (50) are so configured and arranged in the unit (20) that the sockets (50) serve to position the respective under-blocks (47) laterally and rotationally with respect to the light-strip (41).

6. The illuminated key-pad unit (20) of claim 5, wherein the under-blocks (47) are attached to the underface (49) of the light-strip (41).

7. The illuminated key-pad unit (20) of claims 5 or claim 6, wherein the under-blocks (47) are co-molded with the material of the light-strip (41).

8. The illuminated key-pad unit (20) of any preceding claim, wherein:
the keys are arranged in the unit (20) in a plurality of rows of keys;
the unit (20) further comprises a corresponding plurality of the light-strips (41);
the light-strips (41) are disposed respectively side by side along the rows of keys;
the light-strips (41) are linked at their ends by means of respective linking-straps (61); and
the linking-straps are formed with notches (63), which are hooked under tenons (65) formed in the frame (23).

9. The illuminated key-pad unit (20) of any preceding claim, wherein:
the frame (23) comprises dividing rulers (78) between adjacent rows;
the unit (20) comprises light-strips (41) respective to the rows; and
the unit (20) comprises light-catchers (67) respective to the light-strips (41).

10. The illuminated key-pad unit (20) of any preceding claim, wherein:
the over-surface (32) of the key-cap comprises an opaque coating (34);
a transparent or translucent window (36) in the coating is of such configuration as to signify a key-identification marking; and
the physical structure of the key-cap is such that the light entering the key-cap through the under-surface (38) of the key-cap can pass through the light-transmitting material of the key-cap, and can emerge through the window (36).

11. The illuminated key-pad unit (20) of any preceding claim further comprising a PCB (21) carrying a light-source, wherein:
the light-strip (41) comprises a light-catcher, which is so located in the unit (20) as to receive light from the light-source when the unit (20) is assembled to the PCB;
the light-source comprises a light-emitting diode (LED) (70) mounted on and fixed in, the PCB;
the light-catcher comprises a portion of light-transmitting material that is thicker than the light-strip (41); and
the light-catcher is bonded fast to the material of the light-strip (41).

12. The illuminated key-pad unit (20) of claim 11 wherein the light-catcher is co-molded to the light-strip (41).

13. A method for manufacturing an illuminated key-pad unit (20) of claim 1, comprising the steps of:
providing a plurality of depressible key-caps (29), in which each key-cap (29) is of a transparent or translucent light-transmitting material, and includes a soft, springy and
resilient web (52), the webs secured to rails and arranged in pockets defined by a key-pad unit frame (23);
providing a corresponding plurality of key-switch-actuators (56), adapted for contacting respective key-switches (58) mounted on a PCB;
providing a light-strip (41), of such structure as to be capable of transmitting light received from a light-source, along the light-strip (41), and of radiating that light from an overface (43) of the light-strip (41);
gluing the key-caps (29) onto the overface (43) of the light-strip (41); and
attaching the key-switch-actuators onto an underface (49) of the light-strip (41);
whereby the light-strip (41) resides between the key-caps (29) and their respective key-switch-actuators, and whereby the light-strip (41) is depressed when the key-cap is depressed.

14. The method of claim 13, further comprising assembling the key-pad unit (20) to the PCB (21), which contains key-switches and which contains a light-source.

15. The method of claim 13 or claim 14, further comprising:
providing a light-shield (72), comprising a strip of opaque sheet material, having a corresponding plurality of cut-outs; and
bonding the key-caps (29) to the light-strip (41) through the respective cut-outs in the light-shield.

## Patentansprüche

1. Beleuchtete Tastatureinheit (20) umfassend:
einen Satz herunterdrückbarer Tasten, die auf einem Grundrahmen (23) montiert sind; und
eine Lichtleiste (41) aus durchsichtigem oder transluzentem lichtdurchlässigem Material;
wobei eine physikalische Struktur der Lichtleiste (41) derart ist, dass die Lichtleiste (41) in der Lage ist, Licht, das von einer Lichtquelle entgegengenommen worden ist, der Lichtleiste (41) entlang zu übertragen und das Licht von einer Oberseite (43) der Lichtleiste (41) auszustrahlen;
wobei:
die Tasten jeweils Tastenkappen (29) umfassen, die jeweils ein Formteil aus einem durchsichtigen oder transluzenten lichtdurchlässigen Material umfassen und jeweils eine obere Fläche (32) und eine untere Fläche (38) und eine weiche, federnde und nachgiebige Bahn (52) umfassen;
die Oberseite (43) der Lichtleiste (41) sich in gegenüberliegendem Verhältnis zu der unteren Fläche (38) der Tastenkappe befindet;
die Oberseite (43) der Lichtleiste (41) sich in direktem lichtdurchlässigem Verhältnis zu der unteren Fläche (38) der Tastenkappe befindet;
das Material der Lichtleiste (41) flexibel ist; und
die untere Fläche (38) der Tastenkappe an die Oberseite (43) der Lichtleiste (41) geklebt ist;
wobei die Lichtleiste (41) heruntergedrückt wird, wenn die Tastenkappe heruntergedrückt wird, **dadurch gekennzeichnet, dass** der Rahmen (23) als Gitter konfiguriert ist, indem der Rahmen (23) Schienen (25) umfasst, die Taschen (27) mit Bezug auf die Tastenkappen (29) zwischen den Schienen definieren:
die Bahnen (52) an den Schienen befestigt und in den Taschen, die durch den Rahmen (23) definiert werden, angeordnet sind.

2. Beleuchtete Tastatureinheit (20) nach Anspruch 1, wobei die Oberfläche (43) der Lichtleiste (41) sich in direkt berührendem Kontakt mit der unteren Fläche (38) der Tastenkappe befindet.

3. Beleuchtete Tastatureinheit (20) nach Anspruch 1 oder Anspruch 2, wobei:
die Einheit (20) so konfiguriert und angeordnet ist, dass die Tastenkappen (29) durch die Nachgiebigkeit der Bahnen (52) in entsprechende Ruhestellungen gedrängt werden, aus denen die Tastenkappen (29) durch manuellen Druck gegen die Nachgiebigkeit der Bahnen (52) heruntergedrückt werden können.

4. Beleuchtete Tastatureinheit (20) nach Anspruch 3, wobei die Bahnen (52) Siliconkautschuk umfassen.

5. Beleuchtete Tastatureinheit (20) nach einem der vorhergehenden Ansprüche, wobei:
sich jeweils blockaufnehmende Anschlussdosen auf den Bahnen (52) befinden; und
die Einheit (20) des Weiteren Unterblöcke (47) jeweils mit Bezug zu den Tastenkappen (29) umfasst, die sich unter der Lichtleiste (41) befinden;
wobei :
die Unterblöcke (47) jeweils Oberflächen umfassen, die einer Unterseite (49) der Lichtleiste (41) gegenüberliegen und die Oberflächen der Unterblöcke (47) lichtundurchlässig und lichtreflektierender Natur sind; und
die blockaufnehmenden Anschlussdosen (50) in der Einheit (20) so konfiguriert und angeordnet sind, dass die Anschlussdosen (50) zum seitlichen und drehbaren Positionieren der jeweiligen Unterblöcke (47) mit Bezug auf die Lichtleiste (41) dienen.

6. Beleuchtete Tastatureinheit (20) nach Anspruch 5, wobei die Unterblöcke (47) an der Unterseite (49) der Lichtleiste (41) befestigt sind.

7. Beleuchtete Tastatureinheit (20) nach Anspruch 5 oder Anspruch 6, wobei die Unterblöcke (47) zusammen mit dem Material der Lichtleiste (41) geformt sind.

8. Beleuchtete Tastatureinheit (20) nach einem der vorhergehenden Ansprüche, wobei:
die Tasten in der Einheit (20) in einer Mehrzahl von Reihen von Tasten angeordnet sind;
die Einheit (20) des Weiteren eine entsprechende Mehrzahl von Lichtleisten (41) umfasst;
die Lichtleisten (41) jeweils Seite an Seite den Reihen von Tasten entlang angeordnet sind;
die Lichtleisten (41) an ihren Enden durch jeweilige Verbindungsbänder (61) verbunden sind; und
die Verbindungsbänder mit Kerben (63) ausgebildet sind, die unter in dem Rahmen (23) gebildeten Zapfen (65) eingehakt sind.

9. Beleuchtete Tastatureinheit (20) nach einem der vorhergehenden Ansprüche, wobei:
der Rahmen (23) einteilende Lineale (78) zwischen nebeneinanderliegenden Reihen umfasst;
die Einheit (20) Lichtleisten (41) mit Bezug auf die Reihen umfasst; und
die Einheit (20) Lichtfänger (67) mit Bezug auf die Lichtleisten (41) umfasst.

10. Beleuchtete Tastatureinheit (20) nach einem der vorhergehenden Ansprüche, wobei :
eine obere Fläche (32) der Tastenkappe eine opake Beschichtung (34) umfasst;
ein durchsichtiges oder transluzentes Fenster (36) in der Beschichtung eine derartige Konfiguration aufweist, dass es eine Tastenidentifizierungskennzeichnung bedeutet; und
die physikalische Struktur der Tastenkappe derart ist, dass das Licht, das durch die untere Fläche (38) der Tastenkappe in die Tastenkappe eindringt, durch das lichtdurchlässige Material der Tastenkappe hindurchgehen und durch das Fenster (36) austreten kann.

11. Beleuchtete Tastatureinheit (20) nach einem der vorhergehenden Ansprüche, des Weiteren eine gedruckte Schaltung (PCB) (21) umfassend, die eine Lichtquelle trägt, wobei:
die Lichtleiste (41) einen Lichtfänger umfasst, der sich in der Einheit (20) befindet,
um Licht von der Lichtquelle entgegenzunehmen, wenn die Einheit (20) mit der gedruckten Schaltung zusammengebaut ist;
die Lichtquelle eine lichtemittierende Diode (LED) (70) umfasst, die auf der gedruckten Schalung montiert und darin befestigt ist;
der Lichtfänger einen Abschnitt von lichtdurchlässigem Material umfasst, der dicker ist als die Lichtleiste (41); und
der Lichtfänger fest an das Material der Lichtleiste (41) bondiert ist.

12. Beleuchtete Tastatureinheit (20) nach Anspruch 11, wobei der Lichtfänger zusammen mit der Lichtleiste (41) geformt ist.

13. Verfahren für die Herstellung einer beleuchteten Tastatureinheit (20) nach Anspruch 1, umfassend die Schritte des:
Bereitstellens einer Mehrzahl von herunterdrückbaren Tastenkappen (29), wobei jede Tastenkappe (29) aus einem durchsichtigen oder transluzenten lichtdurchlässigen Material besteht und eine weiche, federnde und nachgiebige Bahn (52) umfasst, die Bahnen an Schienen befestigt und in Taschen angeordnet sind, die durch einen Tastatureinheitsrahmen (23) definiert sind;
Bereitstellens einer entsprechenden Mehrzahl von Tastenschalterauslösern (56), die geeignet sind die jeweiligen auf einer gedruckten Schaltung montierten Tastenschalter (58) zu kontaktieren;
Bereitstellens einer Lichtleiste (41) einer derartigen Struktur, dass sie in der Lage ist, Licht, das sie von einer Lichtquelle entgegengenommen hat, der Lichtleiste (41) entlang zu übertragen und das Licht von einer Oberseite (43) der Lichtleiste (41) auszustrahlen;
Klebens der Tastenkappen (29) auf die Oberseite (43) der Lichtleiste (41); und
Befestigens der Tastenschalterauslöser auf eine Unterseite (49) der Lichtleiste (41);
wobei die Lichtleiste (41) zwischen den Tastenkappen (29) und ihren jeweiligen Tastenschalterauslösern liegt und wobei die Lichtleiste (41) heruntergedrückt wird, wenn die Tastenkappe heruntergedrückt wird.

14. Methode nach Anspruch 13, des Weiteren das Zusammenbauen der Tastatureinheit (20) mit der gedruckten Schaltung (21), die Tastenschalter enthält und die eine Lichtquelle enthält.

15. Methode nach Anspruch 13 oder Anspruch 14, des Weiteren Folgendes umfassend:
das Bereitstellen einer Lichtabdeckung (72) umfassend eine Leiste aus opakem Plattenmaterial, das eine entsprechende Mehrzahl von Ausschnitten aufweist; und
das Bondieren der Tastenkappen (29) an die Lichtleiste (41) durch die jeweiligen Ausschnitte in der Lichtabdeckung.

## Revendications

1. Un clavier illuminé (20) comprenant :
un jeu de touches enfonçables montées sur un châssis (23) ; et
une bande lumineuse (41), composée d'une matière électroluminescente transparente ou translucide ;
dans laquelle la structure physique de la bande lumineuse (41) est elle que la bande lumineuse (41) est capable d'émettre de la lumière reçue d'une source lumineuse le long de la bande lumineuse (41), et de rayonner cette lumière d'une face de recouvrement (43) de la bande lumineuse (41) ;
dans lequel :
les touches comprennent leur propre dessus de touche (29), comprenant chacun un moulage en matière électroluminescente transparente ou translucide, ainsi qu'une face de recouvrement (32), une face inférieure (38), et une membrane souple, flexible et élastique (52) ;
la face de recouvrement (43) de la bande lumineuse (41) est placée face a face à la face inférieure (38) du dessus de touche ;
la face de recouvrement (43) de la bande lumineuse (41) est en rapport d'électroluminescence directe avec la face inférieure (38) du dessus de touche ;
la matière de la bande lumineuse (41) est flexible ; et
la face inférieure (38) du dessus de touche est collé sur la face de recouvrement (43) de la bande lumineuse (41) ;
de sorte que la bande lumineuse (41) soit enfoncée lorsque l'on appuie sur le dessus de touche, **caractérisé par le fait que** le châssis (23) est configuré sous forme de grille, le châssis (23) comprenant des traverses (25) définissant des poches (27) relativement aux dessus de touche (29) entre les traverses ;
les membranes (52) sont fixées aux traverses, et disposées dans les poches définies par le châssis (23).

2. Le clavier illuminé (20) conforme à la revendication 1, dans lequel la face de recouvrement (43) de la bande lumineuse (41) entre en contact directement avec la face inférieure (38) du dessus de touche.

3. Le clavier illuminé (20) conforme à la revendication 1 ou à la revendication 2, dans lequel
le clavier (20) est configuré et aménagé de telle façon que les dessus de touche (20) sont forcés, par l'élasticité des membranes (52), dans leurs positions de repos respectives, desquelles les dessus de touche (29) peuvent être appuyés manuellement contre l'élasticité des membranes (52).

4. Le clavier illuminé (20) conforme à la revendication 3, dans lequel les membranes (52) comprennent du caoutchouc de silicone.

5. Le clavier illuminé (20) conforme à une quelconque des revendications précédentes, dans lequel
sur les membranes (52) se trouvent des douilles réceptrices de blocs respectifs (50) ; le clavier (20) comprenant également des sous-blocs (47), correspondants aux dessus de touche (29), situés sous la bande lumineuse (41) ;
dans lequel :
les sous-blocs (47) comprennent leur propre surface supérieure faisant face à une face inférieure (49) de la bande lumineuse (41), et les surfaces supérieures des sous-blocs (47) étant opaques à la lumière et reflétant cette dernière ; et
les douilles réceptrices de blocs (50) sont configurées et disposées dans le clavier (20) de sorte que douilles (50) positionnent les sous-blocs (47) latéralement et par rotation relativement à la bande lumineuse (41).

6. Le clavier illuminé (20) conforme à la revendication 5, dans lequel les sous-blocs (47) sont fixés sur la face inférieure (49) de la bande lumineuse (41).

7. Le clavier illuminé (20) conforme à la revendication 5 ou à la revendication 6, dans lequel les sous-blocs (47) sont co-moulés avec le matériau de la bande lumineuse (41).

8. Le clavier illuminé (20) conforme à une quelconque des revendications précédentes, dans lequel
les touches sont disposées, dans le clavier (20), de façon à former plusieurs rangées ; le clavier (20) comprend également une série correspondante de bandes lumineuses (41);
les bandes lumineuses (41) sont disposées respectivement côté à côte le long de rangées de touches ;
les bandes lumineuses (41) sont reliées, à leurs extrémités, par des bandes de raccordement (61) ;
et
les bandes de raccordement se composent d'encoches (63) accrochées sous des tenons (65) façonnés dans le châssis (23).

9. Le clavier illuminé (20) conforme à une quelconque des revendications précédentes, dans lequel :
le châssis (23) comprend des règles de séparation (78) entre rangées adjacentes ;
le clavier (20) comprend des bandes lumineuses (41) correspondant aux rangées ; et
le clavier (20) comprend des récepteurs de lumière (67) correspondant aux bandes lumineuses (41).

10. Le clavier illuminé (20) conforme à une quelconque des revendications précédentes, dans lequel :
la face de recouvrement (32) du dessus de touche comprend un revêtement opaque (34) ;
la configuration d'une fenêtre transparente ou translucide (36) dans le revêtement est telle qu'elle représente un repère d'identification de touche ; et
la structure physique du dessus de touche est telle que la lumière pénétrant dans le dessus de touche par la face inférieure (38) du dessus de touche est en mesure de traverser la matière électroluminescente du dessus de touche, et sortir par la fenêtre (36).

11. Le clavier illuminé (20) conforme à une quelconque des revendications précédentes, comprenant également un circuit imprimé (21) transportant une source lumineuse, dans lequel :
la bande lumineuse (41) comprend un récepteur de lumière, situé dans le clavier (20), de façon à recevoir de la lumière d'une source lumineuse après l'assemblage du clavier (20) sur le circuit imprimé ;
la source lumineuse comprend une diode électroluminescente (70) montée sur le circuit imprimé et fixée dans celui-ci ;
le récepteur de lumière comprend une partie de la matière électroluminescente qui est plus épaisse que la bande lumineuse (41) ; et
le récepteur de lumière adhère fixement à la matière de la bande lumineuse (41).

12. Le clavier illuminé (20) conforme à la revendication 11, dans lequel le récepteur de lumière est co-moulé sur la bande lumineuse (41).

13. Une méthode de fabrication d'un clavier illuminé (20), conforme à la revendication 1, comprenant les opérations suivantes :
mise en place d'une série de dessus de touche enfonçables (29), dans laquelle chaque dessus de touche (29) est réalisé dans une matière transparente ou translucide, et comprend une membrane souple, flexible et élastique (52) ; les membranes étant fixées aux traverses et disposées dans des poches délimitées par un châssis (23) de clavier ;
mie en place d'une série d'actionneurs à contact de touche (56) adaptés pour entrer en contact avec des contacts de touches (58) montés sur un circuit imprimé ;
mise en place d'une bande lumineuse (41) dont la structure lui permet de transmettre de la lumière reçue d'une source lumineuse le long de la bande lumineuse (41), et d'assurer le rayonnement de cette lumière par une face de recouvrement (43) de la bande lumineuse (41) ;
fixation par collage des dessus de touche (29) sur la face de recouvrement (43) de la bande lumineuse (41) ; et fixation des actionneurs à contact de touche sur une face inférieure (49) de la bande lumineuse (41) ;
la bande lumineuse (41) étant placée entre les dessus de touche (29) et leurs actionneurs à contact de touche, et la bande lumineuse (41) étant appuyée lorsque l'on appuie sur le dessus de touche.

14. La méthode conforme à la revendication 13, comprenant également l'assemblage du clavier (20) sur le circuit imprimé (21), qui contient des contacts de touche ainsi qu'une source lumineuse.

15. La méthode conforme à la revendication 13 ou à la revendication 14, comprenant également :
la mise en place d'un écran pare-lumière (72) composé d'une bande de feuille de matière opaque dans laquelle ont été pratiqués différents évidements ; et
la fixation des dessus de touche (29) sur la bande lumineuse (41) à travers les évidements correspondants dans l'écran pare-lumière.
